# EUROPEAN PATENT APPLICATION

(11) **EP 4 700 269 A1**
(43) Date of publication of application: **25.02.2026**
(21) Application number: 24792473.1
(22) Date of filing: 01.04.2024
(51) Int. Cl.: F16L 57/00, B65D 59/06, F02M 55/02

(54) **PROTECTIVE CAP FOR SMALL-DIAMETER THICK-WALLED PIPE**

(30) Priority: 19.04.2023 JP 2023068704
(71) Applicant: Usui Co., Ltd., Sunto-gun, Shizuoka 411-8610 (JP)
(72) Inventor: NANAMI, Shingo, Sunto-gun, Shizuoka 411-8610 (JP); KATSUMATA, Hiroyuki, Sunto-gun, Shizuoka 411-8610 (JP)
(74) Representative: Müller-Boré & Partner Patentanwälte PartG mbB
(86) International application number: PCT/JP2024/013413
(87) International publication number: WO 2024/219197

(57) **Abstract**

Provided is a protective cap for a small-diameter thick-walled pipe that does not hinder during bending work or shape inspection of the pipe and it is thus possible to bend the pipe with the protective cap attached, thereby ensuring cleanliness inside the pipe.

The protective cap for a small-diameter thick-walled pipe having a connection head at the end of the thick-walled pipe with the small diameter is composed of an inner cap having an integral structure of a plug to be tightly inserted into the connection head of the pipe and a gripping portion for attachment/detachment and an outer cap that includes a covering portion of the connection head and is fitted removably over the inner cap.

## Description

### Technical Field

The present invention relates to a protective cap for a small-diameter thick-walled pipe having a connection head of the thick-walled steel pipe with the relatively small diameter, such as a high-pressure fuel injection pipe with the diameter of 4 to 20 m/m and the wall thickness of approximately 1 to 8 m/m that is frequently arranged and used, for example, as a fuel supply line in diesel internal combustion engines or hydrogen internal combustion engines.

### Background Art

For example, the high-pressure fuel injection pipe of a diesel internal combustion engine is required to have its inner surface and end face maintained in a clean state at all times, because ingress of metal powder, dust, or other debris may clog its injector and cause engine trouble. It is also necessary to avoid any scratches on its seating surface so as to prevent fluid leakage. Conventionally, a protective cap having a concave cross-sectional shape has typically been fitted to the pipe end, as a measure to prevent such debris from entering or adhering to the pipe end and the inner surface of the fuel injection pipe and to protect the seating surface. However, there has been a problem where such a protective cap cannot serve as a reference surface during bending or shape inspection of the pipe and therefore, the protective cap must be removed for these operations, which inevitably allows debris or the like to enter the pipe, thereby hardly ensuring cleanliness inside the pipe. Then, as a protective cap for resolving the problem, a dust-preventing protective cap for a small-diameter thick-walled pipe has been known, for example, as shown in Fig. 5 (see PTL 1).

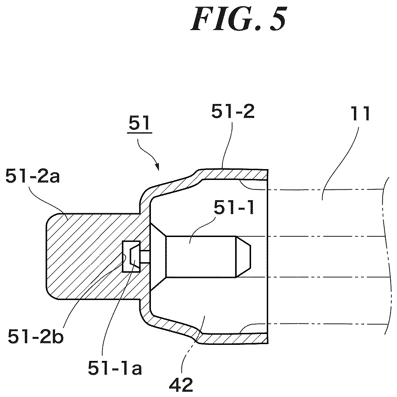

In Fig. 5 illustrating one example thereof, the dust-preventing protective cap 51 for a small-diameter thick-walled pipe is composed of a plug (an inner cap) 51-1 that is tightly inserted into the pipe of a connection head 42 provided at a connection end of the thick-walled steel pipe 11 so that the rear end face thereof and an opening end face of the connection head are flush with each other, and a connection-covering cap body (an outer cap) 51-2 that is attachable to and removable from the plug. The plug (the inner cap) 51-1 has almost the same length as the connection head 42 and includes an engaging projection 51-1a at the outer opening end. The connection head-covering cap body (the outer cap) 51-2 includes a grip 51-2a at its rear face and has a mounting hole 51-2b at the center of its inner end face. The engaging projection 51-1a of the plug 51-1 can be detachably fitted in a concave-convex manner into the mounting hole 51-2b. In the dust-preventing protective cap for a small-diameter thick-walled pipe with such a structure, the engaging projection 51-la of the plug (the inner cap) 51-1 has a trapezoidal shape so that the engaging projection is easily inserted into and is hardly removed from the mounting hole 51-2b provided on the side of the connection head-covering cap body (the outer cap) 51-2.

### Citation List

### Patent Literature

PLT 1: JP 4693077 B2

### Summary of Invention

### Technical Problem

However, when such a conventional dust-preventing protective cap for a small-diameter thick-walled pipe is used, the protective cap with the integral inner and outer cap hinders during bending of the small-diameter thick-walled pipe and it is thus impossible to bend the pipe with the protective cap attached. Besides, if the protective cap is embedded into the end of the small-diameter thick-walled pipe so as not to hinder the bending work, it requires to take time and effort to remove the protective cap, which may lead to deterioration in work efficiency in subsequent processes and impairment in function of the fuel passage due to clogging inside the pipe.

The present invention has been made to solve the problems as described above and provides a protective cap for a small-diameter thick-walled pipe that can achieve the matter that: the protective cap with the inner and outer cap does not hinder during bending work or shape inspection of the pipe and it thus becomes possible to bend the pipe with the protective cap attached, thereby ensuring cleanliness inside the pipe; since bending can be performed with the outer cap removed and only the inner cap attached, it also becomes possible to perform bending outside a clean room; and the inner and outer caps are removed simultaneously when the inner and outer caps are attached.

### Solution to Problem

A protective cap for a small-diameter thick-walled pipe according to the present invention is a cap for protecting a connection head provided at a connection end of the thick-walled steel pipe with the small diameter. The connection head has an outer peripheral surface serving as a seating surface with a frustoconical shape or a truncated arcuate shape for a mating member. The protective cap includes an inner cap that has a plug to be tightly inserted into the connection head of the pipe and an outer cap that has a covering portion of the connection head and is fitted removably over the inner cap. Further, the inner cap may have the integral structure of the plug to be tightly inserted into the connection head of the pipe, the gripping portion for attachment and detachment, and a flange for attachment and detachment with the outer cap. In addition, the outer cap can include a cylindrical body that can removably fit on the connection head of the thick-walled steel pipe, a through hole for engagement with the flange for attachment and detachment with the outer cap on a side of the inner cap of the cylindrical body, a covering section over a neck of the connection head at a lower part of the cylindrical body; and handles on an outer circumference of the cylindrical body. The outer cap may have an inspection window for attachment confirmation of the inner cap at a part of the cylindrical body.

### Advantageous Effects of Invention

A protective cap for a small-diameter thick-walled pipe according to the present invention makes it possible to perform bending work of the pipe with the inner cap attached while preventing contamination and other foreign matter from entering the pipe, by employing the structure having: the inner cap that is integrally formed by the plug to be tightly inserted into the connection head of the thick-walled steel pipe, the gripping portion for attachment/detachment, and the flange for attachment/detachment with the outer cap; and the outer cap composed of the cylindrical body that can removably fit on the connection head of the thick-walled steel pipe and has the through hole for engagement with the flange for attachment/detachment with the outer cap provided at the top face and the covering section over a neck of the connection head of the thick-walled steel pipe around an opening at the bottom, and handles provided on the outer circumference of the cylindrical body.

That is, by achieving bending work of the pipe without removal of the inner cap, it is possible to increase in the range of processing that can be performed outside a clean room. Besides, when the inner cap and the outer cap are attached to the steel pipe, only pulling the inner cap in a direction of removal makes it possible to remove the outer cap at the same time. Furthermore, when the outer cap having the inspection window for attachment confirmation of the inner cap at a part of the cylindrical body, the attached state of the inner cap can be visually checked with accuracy

### Brief Description of Drawings

FIG. 1 is a perspective view of an inner cap showing an example of a protective cap for a small-diameter thick-walled pipe of the present invention.
FIG. 2 is a perspective view of an outer cap showing an example of a protective cap for a small-diameter thick-walled pipe of the present invention.
FIG. 3 is a side view of an outer cap showing an example of another protective cap for a small-diameter thick-walled pipe of the present invention.
FIG. 4 is a longitudinal sectional side view of the protective cap of the present invention in a state of use.
FIG. 5 is a longitudinal sectional side view showing an example of the conventional protective cap for a small-diameter thick-walled pipe.

### Description of Embodiments

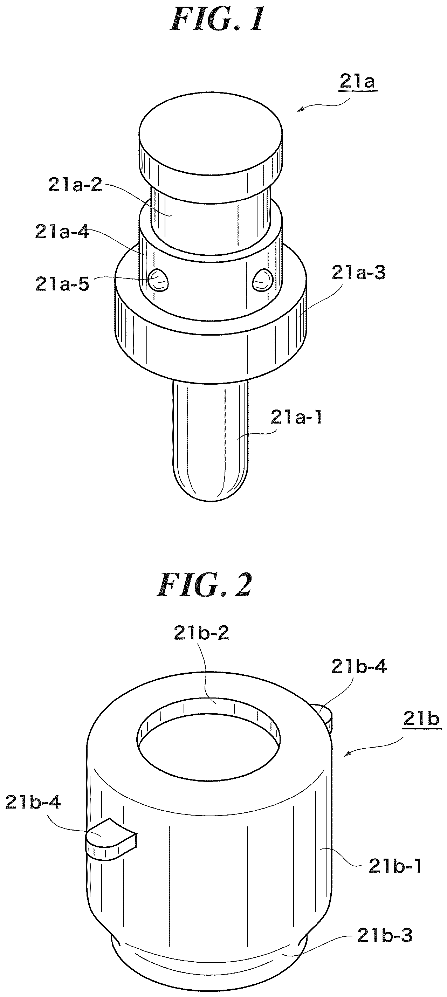

A protective cap 21 for a small-diameter thick-walled pipe shown in Figs. 1 to 4 is composed of an inner cap 21a and an outer cap 21b that is attachable to and detachable from the flange 21a-3 of the inner cap 21a. The inner cap 21a has a plug 21a-1 that is tightly inserted into a connection head 11-1 provided at a connection end of the thick-walled steel pipe 11, a gripping portion for attachment/detachment 21a-2, and a flange 21a-3 for attachment/detachment with the outer cap. The plug 21a-1 of the inner cap 21a has almost the same length as the connection head 11-1 and is integrally formed to be projected from the center of the flange 21a-3 for attachment/detachment with the outer cap. Further, an annular body 21a-4 with a plurality of stopper protrusions 21a-5 for securely fixing the outer cap 21b to the inner cap 21a is integrally formed between the gripping portion for attachment/detachment 21a-2 and the flange 21a-3 for attachment/detachment with the outer cap. Alternatively, the stopper protrusions 21a-5 may be changed to a ring-shaped stopper that is attached to the outer periphery of the annular body 21a-4, instead of the protrusions shown in the drawing.

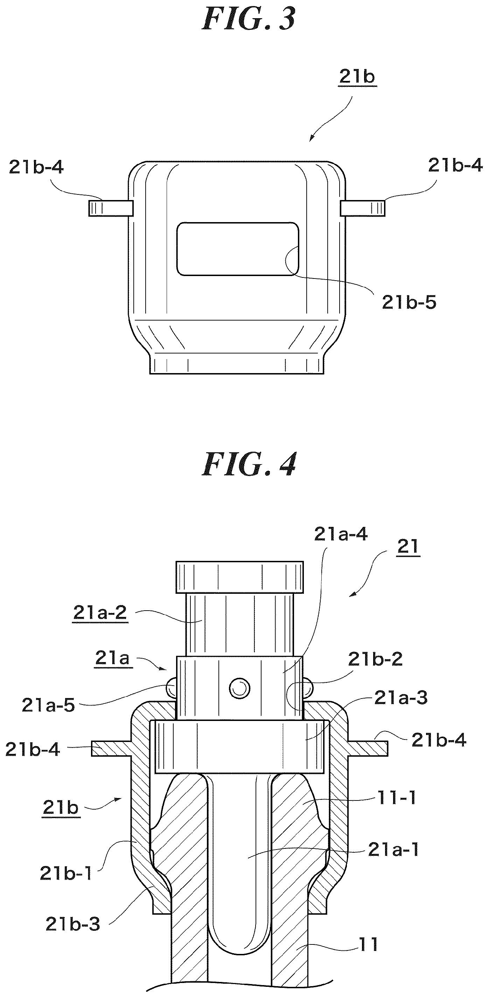

As shown in Figs. 2 and 3, the outer cap 21b includes a cylindrical body 21b-1 as a main body. At the top face of the cylindrical body, a through hole 21b-2 is provided for engagement with the flange 21a-3 of the inner cap 21a. Around an opening at the bottom of the cylindrical body, a covering section (diameter-reduced portion) 21b-3 over a neck of the connection head 11-1 of the thick-walled steel pipe is provided. Reference sign 21b-4 denotes a pair of short handles that are provided to project from the outer surface of the cylindrical body 21b-1. Additionally, the outer cap 21b can include an inspection window 21b-5 for attachment confirmation of the inner cap 21a at a part of the cylindrical body 21b-1 as shown in Fig. 3. The inspection window 21b-5 is not especially limited in size, shape (such as rectangle and circle), and others, but they are defined depending on the size of the protective cap as appropriate.

When the protective cap 21 for a small-diameter thick-walled pipe composed of the inner cap 21a and the outer cap 21b is used, the protective cap 21 is fitted onto the thick-walled steel pipe 11 with the outer cap 21b attached to the flange 21a-3 of the inner cap 21a. Specifically, when the protective cap 21 for a small-diameter thick-walled pipe is fitted onto the thick-walled steel pipe 11, the outer cap 21b is first attached to the inner cap 21a and then the protective cap 21 is fitted to the connection head 11-1 of the thick-walled steel pipe 11 as shown in Fig. 4. In doing so, the plug 21a-1 of the inner cap 21a is inserted until an end face of the connection head 11-1 of the thick-walled steel pipe 11 comes into contact with the flange 21a-3 for attachment/detachment with the outer cap, as shown in Fig. 4. This prevents dust ingress into the connection head 11-1 of the thick-walled steel pipe 11 while the outer seating surface thereof is also fully protected.

More particularly, in cases such as transporting such a small-diameter thick-walled pipe within a factory or between in-house factories, or performing pipe bending of such a small-diameter thick-walled pipe within a factory, the pipe is transported or bent with only the inner cap 21a attached to the pipe.

In addition, in the case of shipment of products such a small-diameter thick-walled pipe for delivery to customers, or in the case of shipment of products after pipe bending of such a small-diameter thick-walled pipe for delivery to customers, the outer cap 21b is further attached on the inner cap 21a to prevent the cap from moving freely during transportation.

Then, when the whole protective cap (the inner and outer caps) is finally removed from the pipe, for example, for mounting the pipe with the protective cap to an injector or the like of an engine, the gripping portion for attachment/detachment is directly pulled up from the connection head 11-1, without any need to pull the handles of the outer cap 21b in a radial direction of the connection head, thereby simultaneously removing the inner cap 21a and the outer cap 21b in a state where the flange 21a-3 for attachment/detachment with the outer cap and the top end of the outer cap are engaged with each other. Accordingly, the inner cap 21a and the outer cap 21b advantageously have the relation that both the caps can be removed easily, quickly, and surely.

Further, if the outer cap 21b with the inspection window 21b-5 for attachment confirmation of the inner cap 21a as shown in Fig. 3 is used, one can visually check a state of attachment of the inner cap 21a and it can be thus confirmed more surely the state of attachment of the inner cap 21a to the connection head 11-1 of the thick-walled steel pipe 11. Also, the protective cap 21 for a small-diameter thick-walled pipe makes it possible to perform bending of the pipe while preventing contamination and other foreign matter from entering into the thick-walled steel pipe 11, even when the outer cap 21b is removed. In addition, since the thick-walled steel pipe 11 can be bent without removal of the inner cap 21a, the range of processing steps that can be performed outside the clean room can be expanded. Furthermore, the protective cap 21 allows for removal of the outer cap 21b from the thick-walled steel pipe 11 simultaneously when the inner cap 21a is pulled out by grasping the gripping portion 21a-2 for attachment/detachment even in a state where the inner cap 21a and the outer cap 21b are attached.

As described above, the protective cap for a small-diameter thick-walled pipe of the present invention allows for performing bending work with the outer seating surface of the connection head of the thick-walled steel pipe fully protected while dust is prevented from entering into the pipe by having the structure composed of the inner cap which is formed integrally with the plug to be tightly inserted into the connection head of the thick-walled steel pipe and the gripping portion for attachment/detachment, and the outer cap which includes the covering portion of the connection head and is removably attached over the inner cap. This produces the advantages: that can bend the pipe with the outer cap removed while contamination and other foreign matter are prevented from entering into the thick-walled steel pipe; that can increase processing steps performable outside a clean room since the thick-walled steel pipe can be bent with the inner cap attached; and that can remove the whole cap (the inner cap and the outer cap) with one-touch operation only by grasping and pulling out the gripping portion. Accordingly, the present invention is of great utility.

### Reference Signs

- 11: thick-walled steel pipe
- 11-1: connection head
- 21: protective cap for small-diameter thick-walled pipe
- 21a: inner cap
- 21a-1: plug
- 21a-2: gripping portion for attachment/detachment
- 21a-3: flange for attachment/detachment with outer cap
- 21a-4: annular body
- 21a-5: stopper protrusion
- 21b: outer cap
- 21b-1: cylindrical body
- 21b-2: through hole for engagement
- 21b-3: covering section (diameter-reduced portion) over a neck of the connection head
- 21b-4: handle
- 21b-5: inspection window

## Claims

1. A protective cap for a small-diameter thick-walled pipe including a connection head at a connection end of the thick-walled steel pipe with the small diameter, the connection head having an outer peripheral surface serving as a seating surface with a frustoconical shape or a truncated arcuate shape for a mating member, the protective cap comprising:
an inner cap having an integral structure of a plug to be tightly inserted into the connection head of the pipe and a gripping portion for attachment and detachment; and
an outer cap including a covering portion of the connection head and fitted removably over the inner cap.

2. The protective cap for a small-diameter thick-walled pipe according to claim 1, wherein the inner cap having the integral structure of the plug to be tightly inserted into the connection head of the pipe, the gripping portion for attachment and detachment, and a flange for attachment and detachment with the outer cap.

3. The protective cap for a small-diameter thick-walled pipe according to claim 1 or 2, wherein the outer cap includes: a cylindrical body that can removably fit on the connection head of the thick-walled steel pipe; a through hole for engagement with the flange for attachment and detachment with the outer cap, according to claim 2, at a top face of the cylindrical body; a covering section over a neck of the connection head at a lower part of the cylindrical body; and handles on an outer circumference of the cylindrical body.

4. The protective cap for a small-diameter thick-walled pipe according to claim 1 or 2, wherein the outer cap has an inspection window for attachment confirmation of the inner cap at a part of the cylindrical body.
